# EUROPÄISCHE PATENTANMELDUNG

(11) **EP 2 354 109 A2**
(43) Veröffentlichungstag der Anmeldung: **10.08.2011**
(21) Anmeldenummer: 11000463.7
(22) Anmeldetag: 21.01.2011
(51) Int. Cl.: C04B 28/18, C04B 38/00, C04B 38/02, C04B 38/10

(54) **Mineralischer Formkörper, Verwendung und Verfahren zur Herstellung des mineralischen Formkörpers**

(30) Priorität: 21.01.2010 DE 102010005361
(71) Anmelder: Veit Dennert KG Baustoffbetriebe, D-96130 Schlüsselfeld (DE)
(72) Erfinder: Dennert, Frank, 96138 Burgebrach (DE); Dennert, Veith, Dr., 96120 Bischberg (DE)
(74) Vertreter: LOUIS, PÖHLAU, LOHRENTZ

(57) **Zusammenfassung**

Die Erfindung betrifft einen mineralischer Formkörper, wobei der mineralische Formkörper mit wenigstens einem Hydrophobierungsmittel teilweise hydrophobierte Poren und/oder Kapillaren aufweist, wobei die teilweise hydrophobierten Poren und/oder Kapillaren homogen im Formkörper verteilt sind und das Wasseraufnahmevermögen eines eine Grundfläche von 40 cm Länge und 25 cm Breite und eine Höhe von 8 cm aufweisenden mineralischen Formkörpers nach 30 minütigem Eintauchen in Wasser in einem Bereich von 1400 bis 4000 g/m² liegt, wobei der Formkörper mit der Grundfläche in Wasser in einer Tiefe von 1 cm eingetaucht ist. Die Erfindung betrifft des weiteren die Verwendung als auch ein Verfahren zur Herstellung des Formkörpers.

## Beschreibung

Die Erfindung betrifft einen mineralischen Formkörper, ein Verfahren zur Herstellung des mineralischen Formkörpers sowie die Verwendung des mineralischen Formkörpers als Dämmmaterial als auch ein Bauelement, welches den mineralischen Formkörper umfasst.

Aus dem Stand der Technik ist es bekannt, mineralische Dämmelemente, sogenannte Gas- oder Porenbetonsteine herzustellen, die aufgrund ihrer Porenstruktur eine gute Wärmedämmfähigkeit aufweisen.

Im allgemeinen werden solche Porenbetonsteine aus einer Bindemittelschlämme mit Kalk oder Zement als Bindemittel hergestellt, die durch Versetzen mit einem Treibmittel, auch als Porenbildner bezeichnet, aufgeschäumt wird. Als Treibmittel können beispielsweise Aluminiumpulver oder reaktive Aluminatverbindungen eingesetzt werden. Alternativ ist es auch möglich, statt eines Treibmittels einen Schaum als Porenbildner zu verwenden. Als Schaum kann beispielsweise ein Tensid- oder Proteinschaum oder eine Mischung davon eingesetzt werden. Die so hergestellte Rohmischung wird dann in Formen gegossen und nach genügender Verfestigung der Masse abschließend gehärtet, beispielsweise in einem Autoklaven unter Dampfhärtung.

Die so erhaltenen mineralischen Formkörper können aufgrund ihrer Porosität als Wärmedämmmaterial eingesetzt werden.

Darüber hinaus zeigen die mineralischen Formkörper aufgrund ihrer Porosität eine Wasseraufnahmefähigkeit, wobei eine Wasseraufnahme die Wärmedämmfähigkeit reduzieren kann. Daher sind aus dem Stand der Technik zahlreiche Verfahren zur Hydrophobierung porenhaltiger mineralischer Dämmmaterialien bekannt, um die Dämmmaterialien wasserabweisend zu machen. Derartig hydrophobierte Dämmmaterialien werden beispielsweise im Außenbereich verwendet.

So beschreibt die GB 2 043 047 A einen dampfgehärteten, hydrophoben Leichtbeton, bei dem als Hydrophobierungsmittel Silikonöl mit einem Anteil von maximal 0,5 Gew.-%, bezogen auf das Trockengewicht der Ausgangsmischung, eingesetzt wird.

Die EP 0 053 223 A1 offenbart ein Verfahren zum Herstellen von Bausteinen oder Bauteilen, wobei das Ausgangsmaterial zur Hydrophobierung ein Organo(poly)siloxan in Mengen von bis zu 5 Gew.-%, jeweils bezogen auf das Gesamtgewicht von trockenem hydraulischen Bindemittel und trockenem Zusatzstoff, enthält.

Die DE 101 31 360 A1 beschreibt ein Verfahren zur Herstellung von Porenbeton-Dämmplatten, wobei als Hydrophobierungsmittel eine wasserverdünnte Mikroemulsion eines Siloxans verwendet wird, so dass die Dämmplatten nach der Härtung wasserabweisend sind.

Aus der DE 197 23 426 C1 ist ein Verfahren zur Herstellung einer leichten, offenporigen und hydrophobierten mineralischen Dämmplatten bekannt. Als Hydrophobierungsmittel wird ein handelsübliches Silikonöl in einer Menge von bis zu 0,5 Massen-% verwendet. Die fertigen Dämmplatten sind nach dem Autoklavieren ohne zusätzliche Imprägnierungsbehandlung im Oberflächenbereich sowie im Innenbereich vollständig hydrophobiert und behalten deshalb ihre hydrophobe Eigenschaft auch nach dem Aufteilen in kleinere Plattenabschnitte bei.

Die EP 1 688 401 A2 offenbart ein mineralisches Dämmelement, bei dem tetrafunktionelles Polysiloxan in Verbindung mit feinteiligem Aluminium einer Suspension aus Bindemittel und Zuschlagsstoffen zugesetzt wird, wobei das mineralische Dämmelement so genannte Treibporen aufweist. Die Treibporen sind im Hinblick auf den Porendurchmesser sehr heterogen. Das erhaltene mineralische Dämmelement ist sehr hydrophob und weist ein geringes Wasseraufnahmevermögen auf.

Die nach den aus dem Stand der Technik bekannten Verfahren hergestellten porenhaltigen mineralischen Formkörper können aufgrund ihrer geringen Wärmeleitfähigkeit zur Wärmedämmung von Gebäuden eingesetzt werden. Dabei wird in der Regel die Wärmedämmung auf die Außenseite eines Gebäudes aufgebracht.

In Fällen, in denen eine Außendämmung nicht möglich ist, bspw. aus Denkmalschutzgründen, bei schwierigen Raumsituationen, z.B. bei überbauten Kellerräumen oder Grundstücksgrenzen, bei engen Innenstadtlagen oder bei partiellen Dämmmaßnahmen werden vermehrt Innendämmungen vorgenommen. Darüber hinaus bieten Innendämmungen die Möglichkeit, einzelne Wohnungen oder Räume zu dämmen, z.B. in Mehrfamilienhäusern. Allerdings tritt bei Innendämmungen das Problem auf, dass es zur Kondensation der Luftfeuchtigkeit und mithin zur Schimmelbildung kommt.

Der Feuchtegehalt der Luft in Räumen oder Gebäuden ist dabei von verschiedenen Faktoren, wie Temperatur der Luft, Anzahl von Personen und Pflanzen in den Räumen oder Gebäuden, Nutzungsart der Räume, Be- und Entlüftungsmöglichkeiten, etc. stark abhängig.

Der Feuchtegehalt der Raumluft ist zum Einen für die in diesen Räumen sich aufhaltenden Personen von großer Bedeutung. Bei einer zu hohen Luftfeuchtigkeit kann in hohem Maße die Wärmeregulation des Körpers beeinträchtigt werden, da bei höherer Luftfeuchtigkeit das ausgeschwitzte Wasser schwerer verdunstet und somit die Wärmeregulierung des Körpers beeinträchtigt. Zu trockene Luft führt hingegen zu einer Verkrustung und Reizung der Schleimhäute oder zu Augenentzündungen. Darüber hinaus besteht bei einer hohen Luftfeuchtigkeit zum Anderen die Gefahr, dass es zur Schimmelpilzbildung innerhalb des Raumes kommt.

Aufgabe der Erfindung ist es, für die vorgenannten Probleme eine Lösung zu finden. Insbesondere ist es Aufgabe der Erfindung, ein Material bereitzustellen, mit dem die Feuchtigkeit in Räumen reguliert bzw. gepuffert werden kann. Dieses Material soll des weiteren über thermische Dämmeigenschaften verfügen.

Die der Erfindung zugrundeliegende Aufgabe wird durch die Bereitstellung eines mineralischen Formkörpers gelöst, wobei der mineralische Formkörper mit wenigstens einem Hydrophobierungsmittel teilweise hydrophobierte Poren und/oder Kapillaren aufweist, wobei die teilweise hydrophobierten Poren und/oder Kapillaren homogen im Formkörper verteilt sind und das Wasseraufnahmevermögen eines eine Grundfläche von 40 cm Länge und 25 cm Breite und eine Höhe von 8 cm aufweisenden mineralischen Formkörpers nach 30 minütigem Eintauchen in Wasser in einem Bereich von 1400 bis 4000 g/m² liegt, wobei der Formkörper mit der Grundfläche in Wasser in einer Tiefe von 1 cm eingetaucht ist.

Die Aufgabe wird ebenfalls gelöst durch die Bereitstellung eines Bauelementes, das wenigstens einen erfindungsgemäßen mineralischen Formkörper umfasst oder daraus entsteht.

Die Aufgabe wird weiterhin gelöst durch die Verwendung des erfindungsgemäßen mineralischen Formkörpers als Dämmmaterial, vorzugsweise als InnenraumDämmmaterial.

Die Aufgabe der vorliegenden Erfindung wird darüber hinaus gelöst durch die Bereitstellung eines Verfahrens zur Herstellung des mineralischen Formkörpers nach einem der Ansprüche 1 bis 12, wobei das das Verfahren folgende Schritte umfasst:
a) Mischen wenigstens einer flüssigen Phase, wenigstens eines mineralischen Bindemittels und wenigstens eines Porenbildners unter Bereitstellung einer Rohmischung;
b) Formen der Rohmischung;
c) Härten und/oder Trocknen der geformten Rohmischung unter Bereitstellung des Formkörpers.

Bevorzugte Weiterbildungen der Erfindung sind in den Unteransprüchen angegeben.

Der erfindungsgemäße mineralische Formkörper weist teilhydrophobierte Poren und/oder teilhydrophobierte Kapillaren auf, welche homogen im mineralischen Formkörper verteilt sind. Die homogene Verteilung der teilhydrophobierten Poren und/oder Kapillaren ist wesentlich, um ein Material mit zugleich guten Dämmeigenschaften und guter Feuchtepufferkapazität bereitszustellen.

Gemäß einer bevorzugten Weiterbildung der Erfindung liegt das Wasseraufnahmevermögen eines eine Grundfläche von 40 cm Länge und 25 cm Breite und eine Höhe von 8 cm aufweisenden mineralischen Formkörpers nach 30 minütigem Eintauchen in Wasser in einem Bereich von 1500 bis 3500 g/m², weiter bevorzugt in einem Bereich von 1800 bis 3200 g/m², noch weiter bevorzugt in einem Bereich von 2100 bis 3000 g/m² wobei der Formkörper mit der Grundfläche in Wasser in einer Tiefe von 1 cm eingetaucht ist.

Das Wasseraufnahmevermögen wird - ausgehend von dem vorstehend definierten Prüfkörper und der aufgenommenen Wassermenge - auf 1 m² mit einer Dicke von 8 cm berechnet und in der Einheit [g/m²] berechnet.

Des weiteren ist eine homogene Verteilung der teilhdydrophobierten Poren wesentlich, um den Formkörper, beispielsweise ein Dämmmaterial, weiter zerteilen zu können, beispielsweise auf einer Baustelle, wobei sämtliche abgetrennten Teile nach wie vor den gleichen Hydrophobierungsgrad aufweisen. Aufgrund der homogenen Verteilung der teilhydrophobierten Poren und/oder Kapillaren können die abgetrennten Teile vollständig und austauschbar verwendet werden, ohne dass Qualitätseinbußen auftreten.

Es hat sich gezeigt, dass eine homogene Verteilung teilhydrophobierter Poren und/oder Kapillare nicht durch eine nachträgliche Hydrophobierung eines Dämmmateriales erreicht werden kann. Bei einer nachträglichen Hydrophobierung eines Dämmmateriales, beispielsweise durch Aufsprühen eines Hydrophobierungsmittels, kommt es zu einer Gradientenbildung, so dass oberflächlich eine starke Hydrophobierung vorliegt, wohingegen im Inneren des Dämmmateriales der Hydrophobierungsgrad unter Ausbildung eines steilen Gradientens schnell abnimmt.

Unter Porosität wird im Rahmen der vorliegenden Erfindung das Verhältnis von Hohlraumvolumen zu Gesamtvolumen des mineralischen Formkörpers verstanden, wobei sich die Gesamtporosität des mineralischen Formkörpers aus der Summe der Hohlräume, die untereinander und mit der Umgebung in Verbindung stehen (offene Porosität) und der nicht miteinander verbundenen Hohlräume (geschlossene Porosität) zusammensetzen kann.

Insbesondere wird unter Porosität das Verhältnis des Volumens aller Hohlräume des erfindungsgemäßen mineralischen Formkörpers zu dessen äußeren Volumen verstanden.

Der erfindungsgemäße mineralische Formkörper weist teilweise mit einem Hydrophobierungsmittel hydrophobierte Poren auf, die wenigstens teilweise offenzellig oder gemischtzellig sind. Unter gemischtzellig wird verstanden, dass der Formkörper sowohl offenzellige Poren, deren Hohlräume miteinander in Verbindung stehen, als auch geschlossenzellige Poren, der Poren geschlossen sind und die nicht miteinander in Verbindung stehen, aufweisen.

Vorzugsweise weist der erfindungsgemäße mineralische Formkörper eine Gesamtporosität von größer als 80 Vol.-%, weiter bevorzugt von größer als 85 Vol.-%, auf.

Bei einer weiteren bevorzugten Ausführungsform liegt die Gesamtporosität des mineralischen Formkörpers in einem Bereich von 90 Vol.-% bis 98 Vol.-%, vorzugsweise von 92 bis 97 Vol.-%, weiter bevorzugt von 93 Vol.-% bis 96 Vol.-%. Vorzugsweise weisen mehr als 60 Vol.-%, insbesondere mehr als 75 Vol.-%, der Poren einen Durchmesser kleiner als 1,0 mm auf. Bei einer weiteren bevorzugten Ausführungsform weisen 85 Vol.-%, vorzugsweise mehr als 95 Vol.-% der Poren einen Durchmesser < 1,5 mm auf.

Gemäß einer weiteren bevorzugten Ausführungsform weisen wenigstens 80 Vol.- %, vorzugsweise wenigstens 90 Vol.-%, weiter bevorzugt wenigstens 95 Vol.-%, der Poren einen Porendurchmesser im Bereich von 0,1 bis 0,95 mm, vorzugsweise von 0,2 bis 0,9 mm, noch weiter bevorzugt von 0,25 bis 0,8 mm, auf. Bei diesen Poren handelt es sich um die sogenannten Makroporen, die bereits mit dem unbewaffneten Auge erkennbar sind.

Die Größe der Poren kann bspw. lichtmikroskopisch an Schliffbildern bestimmt werden.

Der erfindungsgemäße mineralische Formkörper weist mit wenigstens einem Hydrophobierungsmittel teilweise hydrophobierte Poren und/oder Kapillare auf, die im Formkörper homogen verteilt sind.

Unter einer teilweisen Hydrophobierung wird im Rahmen der vorliegenden Erfindung eine nicht vollständige Hydrophobierung des mineralischen Formkörpers verstanden. Die teilweise Hydrophobierung liegt erfindungsgemäß zwischen dem hydrophilen mineralischen Formkörper, der keine Hydrophobierung aufweist, und einem Formkörper, der maximal hydrophobiert wurde.

Erfindungsgemäß weist der mineralische Formkörper mithin sowohl hydrophile als auch hydrophobe Eigenschaften auf.

Vorliegend wurde überraschend festgestellt, dass die erfindungsgemäßen Formkörper aufgrund der offenzelligen und teilhydrophoben Poren und/oder Kapillaren ein Wasseraufnahmevermögen besitzen, das zur Regulation der Umgebungsfeuchte, beispielsweise in einer Raumluft, geeignet ist, wobei die Wärmeisolationseigenschaften des Formkörpers nicht wesentlich, vorzugsweise nicht, beeinträchtigt werden. Überraschenderweise kann durch den Grad der Hydrophobierung der Poren und/oder Kapillaren das Wasseraufnahmevermögen des Formkörpers beeinflusst werden, vorzugsweise eingestellt werden.

Bei stärkerer Hydrophobierung der Poren und/oder Kapillaren des Formkörpers wird das Wasseraufnahmevermögen gesenkt. Bei geringerer Hydrophobierung der Poren und/oder Kapillaren des Formkörpers wird das Wasseraufnahmevermögen gesteigert. Bei einer geringeren Hydrophobierung ist der Formkörpers in den Poren und/oder Kapillaren hydrophiler.

So können erfindungsgemäß Formkörper, insbesondere Dämmmaterialien, bereitgestellt werden, deren Feuchtepufferkapazität auf die speziellen Raumerfordernisse eingestellt werden. So kann beispielsweise bei Verwendung der erfindungsgemäßen Formkörper, vorzugsweise in Plattenform, der Hydrophobierungsgrad stärker eingestellt sein, wenn der Formkörper beispielsweise zur Innendämmung eines Bades oder einer Küche verwendet wird. In einem Büro, in dem lediglich ein oder zwei Personen tätig sind, wird der Hydrophobierungsgrad geringer eingestellt, da weniger Luftfeuchte entsteht, die dann von dem Dämmmaterial abgepuffert werden muss. Der erfindungsgemäße Formkörper, beispielsweise in Form von Dämmplatten, kann dazu verwendet werden, eine aus medizinischer Sicht als optimal angesehene relative Luftfeuchtigkeit von 50 bis 60 % einzustellen und zugleich einen Schimmelpilzbefall zu vermeiden.

Erfindungsgemäß kann mithin in Abhängigkeit von der Raumgröße, der Wand-und Deckenflächen, der Anzahl der in dem Raum üblicherweise tätigen oder lebenden Personen, der geographischen Ausrichtung des Raumes, beispielsweise Nord- oder Südausrichtung, etc. ein Formkörper mit geeigneter Teilhydrophobierung als Dämmmaterial, vorzugsweise zur Innendämmung, verwendet werden, um unter Berücksichtigung der vorgenannten Faktoren, eine erforderliche oder gewünschte Feuchtepufferkapazität bereitszustellen und ein angenehmes Feuchteklima bei gleichzeitiger Wärmedämmung zu erhalten.

Die Einstellung der Feuchtepufferkapazität ermöglicht es auch, dass bei heißen Temperaturen verstärkt Feuchtigkeit in die Räume abgegeben wird und so eine unerwünschte Absenkung der relativen Luftfeuchtigkeit in dem Raum verringert wird, vorzugsweise vermieden wird.

Der erfindungsgemäße Formkörper kann mithin Feuchtigkeit aufnehmen bzw. abpuffern, ohne dass es dabei zur Kondensation und mithin zu nassen Bereichen kommt, wodurch die Wärmekapazität beeinträchtigt würde und es zu einem Schimmelpilzbefall käme.

Der Grad der Hydrophobierung kann durch Ermittlung des Wasseraufnahmevermögens eines mineralischen Formkörpers ermittelt werden. Erfindungsgemäß wird ein Formkörper in Form eines Prüfkörpers mit einer definierten Grundfläche von 40 cm Länge und 25 cm Breite für 30 Minuten 1 cm tief in Wasser eingetaucht und dessen Wasseraufnahmevermögen bestimmt.

Die Bestimmung des Wasseraufnahmevermögens erfolgt bei Umgebungstemperaturen, üblicherweise in einem Temperaturbereich von 15 bis 30°C, unter Umgebungsdruck. Obgleich die Bestimmung des Wasseraufnahmevermögens des erfindungsgemäßen Formkörpers nicht wesentlich von der Umgebungstemperatur und dem Umgebungsdruck abhängt, kann das Wasseraufnahmevermögen auch standardisiert bei einer Temperatur von 25 °C und einem Druck von 1013 mbar bestimmt werden.

Das Wasseraufnahmevermögen stellt dabei ein Maß für die Feuchtepufferkapazität oder die Wasserdampf-Pufferkapazität des erfindungsgemäßen mineralischen Formkörpers dar.

Der erfindungsgemäße mineralische Formkörper weist nach 30-minütigem Eintauchen des Prüfkörpers in einer Tiefe von 1 cm ein Wasseraufnahmevermögen in einem Bereich von 1400 bis 4000 g/m², vorzugsweise von 1500 bis 3500 g/m², weiter vorzugsweise von 1800 bis 3200 g/m², noch weiter bevorzugt von 2100 bis 3000 g/m², auf.

Es wurde festgestellt, dass das Wasseraufnahmevermögen bezogen auf die Grundfläche des mineralischen Formkörpers nach 30-minütigem Eintauchen in Wasser einer Tiefe von 1 cm eine sehr gute Abschätzung der kurzfristigen Wasserdampf- oder Feuchtepufferkapazität des mineralischen Formkörpers ermöglicht.

Gemäß der DIN EN 1609 kann die Wasseraufnahme eines Baustoffes nach 24-stündigem teilweisen Eintauchen bestimmt werden, wobei aber kurzzeitige Effekte, wie etwa eine schnelle oder langsamere Wasseraufnahme im Anfangsbereich der Wasseraufnahme nicht berücksichtigt werden.

Unterschiede im kurzfristigen (spontanen) Aufnahmeverhalten des mineralischen Formkörpers, die beispielsweise durch einen unterschiedlichen Anteil des Hydrophobierungsmittels oder durch die Verwendung unterschiedlicher Hydrophobierungsmittel resultieren, können durch die in der DIN EN 1609 spezifizierten Methode nicht oder nur ungenügend nachgewiesen werden, da sich nach 24 Stunden im wesentlichen ein Gleichgewichtszustand zwischen Wasseraufnahme und Wasserabgabe der mit wenigstens einem Hydrophobierungsmittel teilweise hydrophobierten Poren und/oder Kapillaren des mineralische Formkörpers eingestellt hat.

Kinetische Effekte, die vor der Einstellung des Gleichgewichtes auftreten und beispielsweise durch den Belegungs- oder Bedeckungsgrad der Poren und/oder Kapillare des mineralischen Formkörpers mit dem wenigstens einen Hydrophobierungsmittel erzielt werden, werden durch die in der DIN EN 1609 spezifizierten Methode nicht erfasst.

Allerdings spielen Effekte, die vor der Einstellung des Gleichgewichtes der Wasseraufnahme eines mineralischen Formkörpers auftreten, bei der kurzfristigen oder spontanen Pufferung der Feuchte oder des Wasserdampfes in Räumen, beispielsweise durch kurzeitiges Lüften oder erhöhte Transpiration, eine wichtige Rolle.

Überraschenderweise weist der erfindungsgemäße mineralische Formkörper, welcher mit wenigstens einem Hydrophobierungsmittel wenigstens teilweise hydrophobierte Poren und/oder Kapillaren aufweist, wobei die teilweise hydrophobierten Poren und/oder Kapillaren homogen im Formkörper verteilt sind und wobei das Wasseraufnahmevermögen eines eine Grundfläche von 40 cm Länge und 25 cm Breite und eine Höhe von 8 cm aufweisenden mineralischen Formkörpers nach 30-minütigem Eintauchen in Wasser in einem Bereich von 1400 bis 4000 g/m² liegt, wobei der Formkörper mit der Grundfläche in Wasser in einer Tiefe von 1 cm eingetaucht ist, eine gute kurzeitige Wasserdampf- oder FeuchtePufferkapazität auf, ohne jedoch auf Grund einer zu starken Wasseraufnahmefähigkeit zu einer zu trockenen Raumluft zu führen.

Vorzugsweise liegt der Anteil des Hydrophobierungsmittels in dem mineralischen Formkörpers in einem Bereich von 0,01 bis 0,15 Gew.-%, weiter bevorzugt 0,02 bis 0,13 Gew.-%, weiter bevorzugt 0,03 bis 0,11 Gew.-%, weiter bevorzugt 0,04 bis 0,09 Gew.-%, noch weiter bevorzugt von 0,05 bis 0,07 Gew.-%, jeweils bezogen auf das Gesamtgewicht des trockenen mineralischen Formkörpers. Als sehr geeignet hat sich auch ein an Anteil an Hydrophobierungsmittel in dem mineralischen Formkörpers im Bereich von 0,03 bis 0,095 Gew.-% erwiesen.

Bei einer bevorzugten Ausführungsform weist das Hydrophobierungsmittel eine kinematische Viskosität, bestimmt gemäß DIN 53018 bei einer Temperatur von 25°C, aus einem Bereich von 20 bis 12500 mm²/s, weiter bevorzugt von 35 bis 5000 mm²/s, weiter bevorzugt von 50 bis 1000 mm²/S, weiter bevorzugt von 100 mm²/s bis 700 mm²/s, weiter bevorzugt von mehr als 300 mm²/s bis 500 mm²/S auf.

Das Hydrophobierungsmittel ist bei einer weiteren bevorzugten Ausführungsform ein monomeres oder polymeres Alkylsilan und/oder monomeres oder polymeres Siloxan, das vorzugsweise verzweigte und/oder unverzweigte Alkylgruppen mit 1 bis 6 Kohlenstoffatomen und/oder Arylgruppen mit 5 bis 7 Kohlenstoffatomen aufweist.

Weiter bevorzugt weist das monomere oder polymere Alkylsilan und/oder monomere oder polymere Siloxan unverzweigte Alkylketten mit 1 bis 4 Kohlenstoffatomen wie Methyl-, Ethyl-, n-Propyl- oder n-Butylgruppen, weiter bevorzugt Methylgruppen und/oder Ethylgruppen, weiter bevorzugt Methylgruppen, auf.

Es hat sich gezeigt, dass monomere oder polymere Alkylsilane und/oder monomere oder polymere Siloxane mit geradkettigen und vorzugsweise kurzkettigen Alkylsubstituenten als Hydrophobierungsmittel besonders geeignet sind. Es wird vermutet, dass diese Hydrophobierungsmittel für die Zwecke der vorliegenden Erfindung besonders gut geeignet sind, da diese weniger hydrophob sind als verzweigte und als längerkettige monomere oder polymere Alkylsilane und/oder verzweigte und längerkettige monomere oder polymere Siloxane, die Alkylketten mit acht und mehr Kohlenstoffatomen aufweisen.

Bei einer weiteren bevorzugten Ausführungsform weist das monomere oder polymere Alkylsilan und/oder monomere oder polymere Siloxan Arylgruppen mit 6 Kohlenstoffatomen auf. Auch hat sich gezeigt, dass die unsubstituierten C₆-Ringe geeigneter sind als substituierte und mithin hydrophobere C₆-Ringe.

Weiter bevorzugt ist, dass das polymere Siloxan ein Polydialkylsiloxan ist, das vorzugsweise aus der Gruppe, die aus Oligoalkylsiloxanen, Polydialkylsiloxanen, wobei Alkyl vorzugsweise für Alkylketten mit 1 bis 6 C-Atomen, vorzugsweise mit 2 bis 4 C-Atomen steht, ausgewählt wird. Äußerst bevorzugt steht Alkyl für Methyl und/oder Ethyl. Erfindungsgemäß haben sich Polydimethylsiloxan und/oder Polydiethylsiloxan als sehr geeignet erwiesen.

Gemäß einer weiteren bevorzugten Ausführungsform hat sich Polyphenylsiloxan als sehr geeignet erwiesen.

Gemäß einer bevorzugten Ausführungsform der Erfindung ist das Hydrophobierungsmittel ein monomeres und/oder polymeres Alkylsilan und/oder monomeres und/oder polymeres Siloxan, welches keine reaktiven Gruppen aufweist.

Bei einer weiteren bevorzugten Ausführungsform ist das polymere Siloxan ein Polydialkylsiloxan, das aus der Gruppe, die aus Polydimethylsiloxan, Polydiethylsiloxan, Polymethylethylsiloxan oder Mischungen davon besteht, ausgewählt wird, und vorzugsweise eine kinematische Viskosität, bestimmt gemäß DIN 53018 bei einer Temperatur von 25°C, aus einem Bereich von 20 bis 5000 mm²/s, weiter bevorzugt von 35 bis 1000 mm²/s, weiter bevorzugt von 100 mm²/S bis 500 mm²/s aufweist.

Erfindungsgemäß können beispielsweise lineare Siliconöle der Firma Wacker Chemie AG (Burghausen, DE), wie etwa POWERSIL® Fluid TR 50, WACKER® AK 35 Siliconöl, WACKER® AK 50 Siliconöl, WACKER® AK 100 Siliconöl, WACKER® AK 350 Siliconöl, WACKER® AK 1000 Siliconöl oder WACKER® AKF 1000 Siliconöl, oder Trimethylsiloxy-terminierte Polydimethylsiloxane der Firma Gelest Inc. (Morrisville, PA, USA), wie etwa DMS-T12, DMS-T12R, DMS-T15, DMS-T21, DMS-T21R, DMS-T22, DMS-T23, DMS-T25, DMS-T31 oder DMS-T35, oder Trimethylsiloxy-terminierte Polydiethylsiloxane der Firma Gelest Inc., wie etwa DES-T15 oder DES-T23, verwendet werden.

Bei einer weiteren bevorzugten Ausführungsform ist das Hydrophobierungsmittel ein monomeres oder polymeres Alkylsilan der allgemeinen Formel (I): 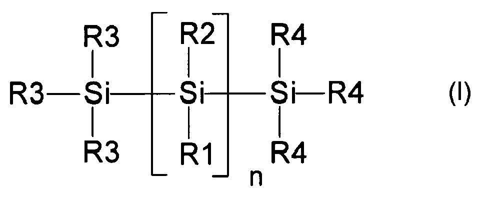 und/oder ein monomeres oder polymeres Siloxan der allgemeinen Formel (II): 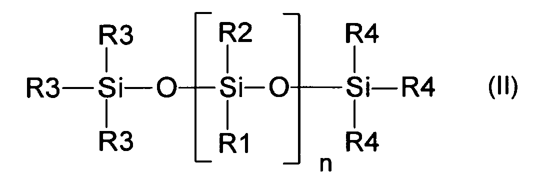 wobei jeweils gilt:
R1 = verzweigte oder unverzweigte Alkylgruppen mit C1 bis C6, vorzugsweise unverzweigte Alkylgruppen mit C1 bis C4 wie Methyl-, Ethyl-, n-Propyl-oder n-Butylgruppen, weiter bevorzugt Methyl- oder Ethylgruppen, weiter bevorzugt Methylgruppen, oder Arylgruppen mit C5 bis C8, vorzugsweise C6;
R2 = verzweigte oder unverzweigte Alkylgruppen mit C1 bis C6, vorzugsweise unverzweigte Alkylgruppen mit C1 bis C4 wie Methyl-, Ethyl-, n-Propyl-oder n-Butylgruppen, weiter bevorzugt Methyl- oder Ethylgruppen, weiter bevorzugt Methylgruppen, oder Arylgruppen mit C5 bis C8, vorzugsweise C6;
R3 = Methyl- und/oder Ethylgruppen, vorzugsweise Methylgruppen;
R4 = Methyl- und/oder Ethylgruppen, vorzugsweise Methylgruppen;
und wobei n eine ganze Zahl aus dem Bereich von 30 bis 700, vorzugsweise 70 bis 400, weiter bevorzugt 120 bis 250, ist.

Bei einer weiteren bevorzugten Ausführungsform weist das monomere oder polymeres Siloxan der allgemeinen Formel (II) eine kinematische Viskosität, bestimmt gemäß DIN 53018 bei einer Temperatur von 25°C, aus einem Bereich von 30 bis 10000 mm²/s, weiter bevorzugt von 80 bis 1200 mm²/s, weiter bevorzugt von 200 mm²/s bis 530 mm²/s, auf.

Bei der Verwendung des mineralischen Formkörpers als Dämmmaterial, vorzugsweise als Innenraumdämmmaterial, sind eine niedrige Wärmeleitfähigkeit und eine geringe Rohdichte von Vorteil. Vorzugweise weist der mineralische Formkörper gleichzeitig eine hohe Druckfestigkeit auf.

Bei einer bevorzugten Ausführungsform weist der mineralische Formkörper eine Rohdichte in einem Bereich von 75 bis 200 kg/m³, vorzugsweise von 80 bis 160 kg/m³, weiter bevorzugt von 85 bis 130 kg/m³, weiter bevorzugt von 100 bis 120 kg/m³, auf. Die Rohdichte des mineralischen Formkörpers kann im trockenen Zustand gemäß der Norm DIN EN 1602 bestimmt werden.

Bei einer bevorzugten Ausführungsform weist der mineralische Formkörper eine Wärmeleitfähigkeit λ₁₀ₜᵣ aus einem Bereich von 0,030 W/(m.K) bis weniger als 0,045 W/(m-K), vorzugsweise von 0,035 W/(m.K) bis 0,044 W/(m.K), weiter bevorzugt von 0,036 W/(m.K) bis 0,042 W/(m.K), weiter bevorzugt von 0,038 bis 0,041 W/(m.K), auf.

Bei einer bevorzugten Ausführungsform weist der mineralische Formkörper eine Wärmeleitfähigkeit λ₁₀ₜᵣ von weniger als 0,042 W/(m.K), weiter bevorzugt von weniger als 0,040 W/(m.K), auf.

Die Wärmeleitfähigkeit kann gemäß der Norm DIN EN 12667 bestimmt werden, wobei λ₁₀ₜᵣ die Wärmeleitfähigkeit im trockenen Zustand (tr) bei einer Referenztemperatur von 10°C bezeichnet.

Der erfindungsgemäße mineralische Formkörper weist vorzugsweise eine Druckfestigkeit, bestimmt nach der Norm DIN EN 826, von größer als 20 kPa, vorzugsweise von größer als 90 kPa, weiter bevorzugt von größer als 120 kPa, auf. Bei einer weiteren bevorzugten Ausführungsform weist der mineralische Formkörper eine Druckfestigkeit, bestimmt nach der Norm DIN EN 826, aus einem Bereich von 20 bis 1500 kPa, vorzugsweise von 50 bis 1100 kPa, weiter bevorzugt von 90 bis 500 kPa, weiter bevorzugt von 110 bis 300 kPa, auf.

Auf Grund der geringen Wärmeleitfähigkeit und der geringen Rohdichte eignet sich der mineralische Formkörper insbesondere als Dämmmaterial, vorzugsweise zur Innendämmung von Räumen.

Vorzugsweise ist wenigstens ein mineralischer Formkörper auf ein Bauelement aufgebracht und/oder bildet ein Bauelement. Das Bauelement ist vorzugsweise ein Fertigbauteil wie eine Wand, Decke oder Dach. Der erfindungsgemäße Formkörper kann dabei beispielsweise in Form von Platten auf vorgefertigten Betonformteilen, gemauerten Formteilen oder auch auf Holzbauformteilen als Dämmmaterial aufgebracht vorliegen. Der erfindungsgemäße Formteil kann dabei formschlüssig oder auch kraftschlüssig, beispielsweise durch Verkleben, aufgebracht sein.

Bei einer besonders bevorzugten Ausführungsform wird der mineralische Formkörper als Innendämmmaterial für Räume verwendet. Vorzugsweise besteht oder umfasst ein Innenraum-Bauelement wenigstens aus einem mineralischen Formkörper.

Der erfindungsgemäße Formkörper ist vorzugsweise ausschließlich aus mineralischen Bestandteilen gefertigt, mithin nicht aus Kunststoffen wie beispielsweise Polystyrol oder Polyurethan. Der erfindungsgemäße Formkörper enthält mithin vorzugsweise keine Kunststoffmaterialien, beispielsweise in Granulat- oder Plattenform.

Grundsätzlich kann der erfindungsgemäße Formkörper aus einer Vielzahl von mineralischen Komponenten, wie hydraulischen und nicht-hydraulischen Bindemitteln und mineralischen Zuschlagsstoffen hergestellt sein. Bei den nicht-hydraulischen Bindemitteln kann es sich beispielsweise um Gips, Anhydrit, Sorelzement, Magnesia-Bindemittel, etc. handeln.

Vorzugsweise werden hydraulische Bindemittel wie beispielsweise Zement und/oder hydraulischer Kalk verwendet.

Es können aber auch latenthydraulische Bindemittel wie beispielsweise Hochofenschlacke verwendet werden.

Neben den Bindemitteln können Zuschlagstoffe wie Sand, Kies, Gesteinsmehl, etc. verwendet werden.

Als flüssige Phase wird üblicherweise Wasser verwendet, das jedoch auch einen Anteil an organischem Lösungsmittel enthalten kann. Vorzugsweise enthält das Wasser kein organisches Lösungsmittel.

Der Anteil an Bindemittel in dem erfindungsgemäßen Formkörper liegt vorzugsweise in einem Bereich von 40bis 60 Gew.-%, weiter bevorzugt von 45 bis 55 Gew.-% , bezogen auf das Gesamtgewicht des trockenen Formkörpers.

Der Anteil an Zuschlagsstoffen in dem erfindungsgemäßen Formkörper liegt vorzugsweise in einem Bereich von 60 Gew.-% bis 40 Gew.-%, weiter bevorzugt von 55 bis 45 Gew.-%, jeweils bezogen auf das Gesamtgewicht des trockenen Formkörpers. Gemäß einer bevorzugten Weiterbildung der Erfindung enthält der erfindungsgemäße Formkörper keine Zuschlagsstoffe.

Bei einer bevorzugten Ausführungsform enthält der mineralische Formkörper Calciumsilikat und/oder Calciumsilikathydrat als Bindemittel. Weiterhin bevorzugt weist der mineralische Formkörper expandiertes, vorzugsweise geschäumtes, Calciumsilikat und/oder Calciumsilikathydrat, auf.

Mit Calciumsilikathydrat-Material wird im Rahmen der vorliegenden Erfindung ein insbesondere zumindest Mikroporen aufweisendes, vorzugsweise ein Mikroporen und aus Bläh- oder Schaumporen entstandene Makroporen aufweisendes synthetisches, hydrothermal erzeugtes mineralisches Material bezeichnet.

Vorzugsweise ist der mineralische Formkörper mit einer CaO- und einer SiO₂ - Komponente hergestellt und vorzugsweise hydrothermal gehärtet.

Weiter ist dem mineralischen Formkörper vor der Hydrothermalhärtung wenigstens ein Porenbildner zugesetzt worden, so dass im gehärteten Formkörper neben aus Wasserkanälen und Kanälen zwischen Calciumsilikathydrat-Kristallen entstandenen Mikroporen auch Makroporen vorhanden sind.

Als Porenbildner kann gemäß einer Variante ein gasbildendes Pulver, wie beispielsweise Aluminium in Form von Aluminiumpulver oder -paste, verwendet, wobei das gasbildende Pulver durch eine chemische Umsetzung Treibporen bildet und den mineralischen Formkörper auf das gewünschte Volumen aufbläht. Bei Verwendung von Aluminiumpulver als Porenbildner reagiert dieses mit Wasser unter Wasserstoffentwicklung, wodurch dann die Poren gebildet werden.

Vorzugsweise enthält der erfindungsgemäße Formkörper keine Treibporen. Es hat sich überraschenderweise gezeigt, dass in einem signifikanten Ausmaß kleinere und gleichmäßigere Poren erhalten werden, wenn als Porenbildner ein Schaum verwendet wird.

Bei einer sehr bevorzugten Ausführungsform der Erfindung ist der Porenbildner mithin ein Schaum, vorzugsweise ein Tensidschaum, weiter bevorzugt ein Proteinschaum. Der Schaum kann sowohl in Form eines Kugelschaums als auch in Form eines Polyederschaums vorliegen. Äußerst bevorzugt wird als Schaum ein Proteinschaum verwendet.

Bei Verwendung eines Schaumes, insbesondere eines Proteinschaumes, enthält der Formkörper keine Treibporen, die üblicherweise eine sehr ungleichmäßige Porengrößenverteilung und bis zu etwa 50 Vol.-% Poren mit einem Porendurchmesser von mehr als 1 mm und bis zu etwa 25 Vol.-% Poren mit einem Porendurchmesser von mehr als 2 mm aufweisen.

Unter Verwendung eines Proteinschaumes als Porenbildner weisen die erfindungsgemäßen Formkörper mehr als 60 Vol.-%, insbesondere mehr als 75 Vol.-%, Poren mit einem Durchmesser von kleiner als 1,0 mm auf. Bei einer weiteren bevorzugten Ausführungsform weist der erfindungsgemäße Formkörper 85 Vol.-%, vorzugsweise mehr als 95 Vol.-% Poren mit einem Durchmesser < 1,5 mm auf.

Bei der Verwendung eines Schaums als Porenbildner wird vorzugsweise wenigstens ein Hydrophobierungsmittel verwendet, welches den Schaum nicht zerstört. Weiter bevorzugt ist die Verwendung von lösungsmittelarmen, weiter bevorzugt lösungsmittelfreien, Hydrophobierungsmitteln.

Bei einer bevorzugten Ausführungsform ist der mineralische Formkörper aus einer Feststoff/Wasser-Suspension mit Wasser und Feststoff und einem Porenbildner hergestellt. Der Feststoff umfasst vorzugsweise mindestens eine hydraulische Bindemittelkomponente, mindestens eine reaktionsfähige SiO₂-Komponente und mindestens eine reaktionsfähige CaO-Komponente.

Bei einer weiteren bevorzugten Ausführungsform umfasst der Feststoffanteil der Feststoff/Wasser-Suspension
25 bis 45 Gew.-%, vorzugsweise 30 bis 40 Gew.-%, mindestens einer hydraulischen Bindemittelkomponente, z.B. Zement
30 bis 55 Gew.-%, vorzugsweise 40 bis 50 Gew.-%, mindestens einer reaktionsfähige SiO₂-Komponente, z.B. Quarzmehl, und
5 bis 25 Gew.-%, vorzugsweise 10 bis 20 Gew.-% mindestens einer reaktionsfähige CaO-Komponente, z.B. Branntkalk und/oder Kalkhydrat, jeweils bezogen auf den Gesamtfeststoffgehalt.

Vorzugsweise kann der Feststoffanteil weitere Zusatzstoffe, wie Kalksteinmehl, Flugasche, Porenbetonmehl und/oder Dämmplattenmehl umfassen.

Weiter bevorzugt weist die Feststoff/Wasser-Suspension ein Wasser/Feststoff-Masseverhältnis (ohne Schaum) von 0,4 bis 1,5, vorzugsweise zwischen 0,5 und 0,65 auf.

Der mineralische Formkörper weist vorzugsweise einen Anteil an Hydrophobierungsmittel von weniger als 0,15 Gew.-%, weiter bevorzugt weniger als 0,13 Gew.-% auf. Gemäß einer weiteren Variante liegt der Anteil an Hydrophobierungsmittel bei weniger als 0,1 Gew.-%, jeweils bezogen auf das Gesamtgewicht des trockenen mineralischen Formkörpers.

Das Hydrophobierungsmittel kann bereits bei der Herstellung der Suspension aus flüssiger Phase, vorzugsweise Wasser, Bindemittel und Porenbildner direkt zugegeben werden. Gemäß einer weiteren Variante der Erfindung werden zunächst flüssige Phase und Bindemittel gemischt. Sodann kann das Hydrophobierungsmittel und schließlich der Porenbildner zugegeben werden. Es ist aber auch möglich, zunächst flüssige Phase und Bindemittel und sodann den Porenbildner und schließlich das Hydrophobierungsmittel zuzugeben. Die Reihenfolge kann in Abhängigkeit von dem verfahrenstechnischen Ablauf variiert werden. Gemäß einer bevorzugten Variante des erfindungsgemäßen Verfahrens wird der Porenbildner zum Schluss zugesetzt.

Wesentlich ist, dass das Hydrophobierungsmittel in die Suspension, d.h. vor dem Härten und/oder Trocknen eingebracht ist, vorzugsweise durch inniges Vermengen der Komponenten.

Aufgrund des Einbringens des wenigstens einen Hydrophobierungsmittels vor dem Härten und/oder Trocknen des Materiales wird eine homogene Verteilung des Hydrophobierungsmittels in dem Formkörper, insbesondere in den Poren und/oder Kapillaren, erreicht.

Das Härten der geformten Rohmischung kann durch Wärmebeaufschlagung in Gegenwart von Wasserdampf, vorzugsweise in einem Autoklaven, erfolgen und wird auch als Hydrothermal-Härten bezeichnet.

Durch die Zugabe des wenigstens einen Hydrophobierungsmittels vor der Hydrothermalhärtung kann eine sehr homogene Verteilung des Hydrophobierungsmittels in dem mineralischen Formkörper erreicht werden.

Der mineralische Formkörper kann beispielweise durch ein Verfahren mit den folgenden Schritten hergestellt werden:
i) Mischen einer flüssigen Phase, wenigstens eines Bindemittels und wenigstens eines Hydrophobierungsmittels unter Bereitstellung eines Gemisches;
ii) Vermengen des in Schritt i) hergestellten Gemisches mit wenigstens einem Porenbildner unter Erhalt einer Rohmischung;
iii) Reifen der geformten Rohmischung in einer Reifekammer;
iv) Formen der Rohmischung, vorzugsweise in einer Form;
v) Aushärten der geformten Rohmischung, vorzugsweise unter Beaufschlagung mit Wasserdampf unter Erhalt eines ausgehärteten mineralischen Formkörpers; und
vi) Optional Trocknen des ausgehärteten mineralischen Formkörpers.

Das Hydrophobierungsmittel kann dabei auch nach dem Schritt ii) zugegeben werden. Der Porenbildner kann auch bereits in Schritt i) zugegeben werden.

Der Reifeschritt kann erfolgt in der Reifekammer. In der Reifekammer ist die Temperatur vorzugsweise leicht erhöht und liegt vorzugsweise in einem Temperaturbereich zwischen 20 und 60 °C, weiter bevorzugt zwischen 40 und 60 °C.

Vorzugsweise erfolgt das Aushärten der geformten Rohmischung in Schritt v) durch Autoklavieren, weiter bevorzugt unter Sattdampfbedingungen.

Das Formen der Rohmischung erfolgt vorzugsweise durch Fördern, beispielsweise Gießen oder Pumpen, in eine Form, beispielsweise zur Herstellung von Platten oder Mauersteinen.

Die Rohmischung kann dann vor oder nach dem Härten, beispielsweise durch Zerteilen, weiter geformt werden. Vor dem Härten und vorzugsweise nach dem Reifen ist der sogenannte Grünkörper noch plastisch und mithin bearbeitbar. In diesem Stadium kann der vorzugsweise gereifte Grünkörper, beispielsweise mittels oszillierender Drähte, beispielsweise zu Platten, zerteilt werden. Nach dem Härten des Formkörpers kann der Formköper auch zerteilt werden, beispielsweise zu Platten, in der Regel durch Zersägen des Formkörpers.

Bei einer weiteren bevorzugten Ausführungsform weist der mineralische Formkörper auf wenigstens einer Fläche ein Haftmittel auf, das vorzugsweise nach dem Härten des Formkörpers aufgebracht wird.

Auch kann der Formkörper vor oder nach dem Aushärten mit Befestigungselementen, wie beispielsweise Haken, Ösen, Klammern, etc., versehen werden. Wenn der Formkörper vor dem Aushärten mit Befestigungselementen versehen wird, dann erfolgt dies vorzugsweise nach dem Reifen der Rohmischung in der Form.

Gemäß einer weiteren Variante weist der erfindungsgemäße Formkörper Ausnehmungen auf, in die beispielsweise Rohre, Leitungen und/oder Kabel aufgenommen werden können. Die Ausnehmungen können bereits beim Formen gebildet werden, in dem die Form eine entsprechende Formgebung aufweist. Die Ausnehmungen des Formkörpers können aber auch nach dem Reifen der Rohmischung oder nach dem Härten, beispielsweise durch Aussägen, ausgebildet werden.

Die Erfindung wird nachfolgend beispielhaft erläutert, ohne hierauf beschränkt zu sein.

### Figuren

Fig. 1 zeigt das Wasseraufnahmevermögen eines erfindungsgemäßen Formkörpers im Vergleich zu zwei vollständig hydrophobierten porösen Formkörpern und einem hydrophilen porösen Formkörper.
Fig. 2 zeigt die Porengrößen eines erfindungsgemäßen Formkörpers im Lichtmikroskop. Die Dicke der Balken ist der Maßstab für die Größen 0,3 mm bis 0,8 mm.

### Beispiel

Zur Herstellung der Rohmischung wurden in einem Einwellenmischer 145 kg Zement 135 kg Quarzmehl und 17,5 kg gebrannter Kalk in 140 l Wasser eingebracht und homogenisiert. In diese homogene Suspension wurden sodann 0,15 l Hydrophobierungsmittel (Wacker^{®} AK 350 Silikonöl) mechanisch eingerührt bis zur homogenen Verteilung des Hydrophobierungsmittels.

In diese Masse wurden schließlich 100 kg 2,5 Gew. %-iger handelsüblicher Proteinschaum in einem Durchlaufmischer eingebracht. Nach dem Einmischen des Proteinschaumes wurde die so erhaltene geschäumte Rohmischung in eine Form (Breite: 80 cm; Länge: 230 cm; Höhe 60 cm) eingebracht.

In der Form reifte die geschäumte Rohmischung für 30 h bei einer Temperatur von 40°C.

Nach dem Reifen wurde der so hergestellte Schaumbetonkuchen aus der Form genommen, zu Platten geschnitten, in einen Autoklaven überführt und unter gesättigtem Wasserdampf bei einer Temperatur von ca. 165°C und einem Druck von 12 bar für 12 h gehärtet.

Nach dem Härten ließ man die so hergestellten Platten auf eine Temperatur von etwa 30 °C abkühlen. Sodann wurden die Platten bei einer Temperatur von 60°C für 30 h in einem Trockenofen getrocknet.

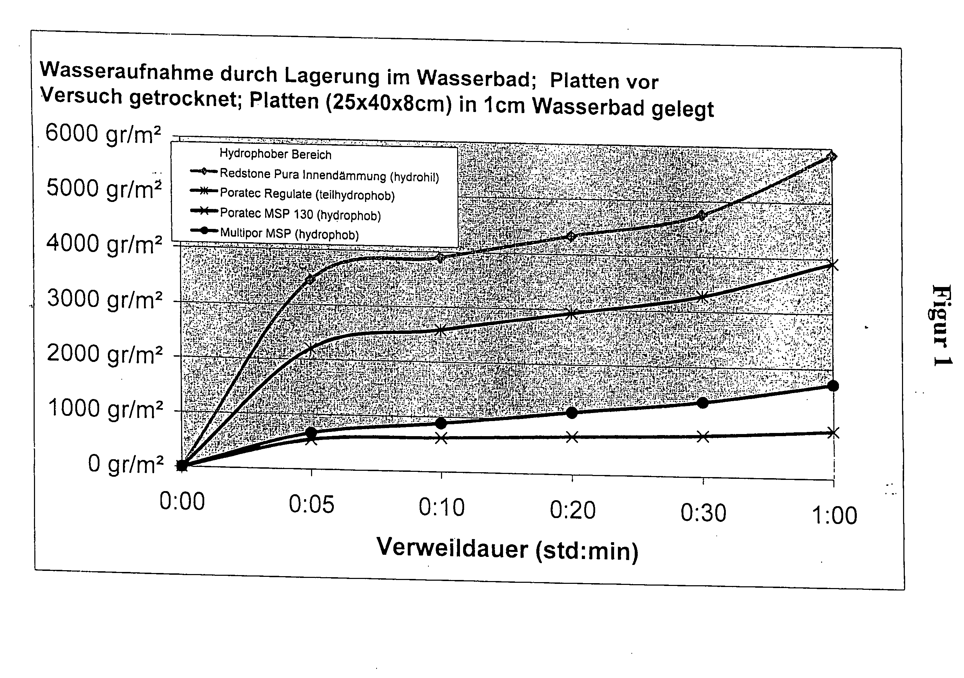

Nach dem Trocknen ließ man die Platten auf Umgebungstemperatur abkühlen. Aus einer Platte wurde sodann ein Prüfkörper mit einer Grundfläche von 40 cm Länge und 25 cm Breite und einer Höhe von 8 cm gesägt. Der erfindungsgemäße Prüfkörper ist in Fig.1 als "Poratec Regulate" bezeichnet.

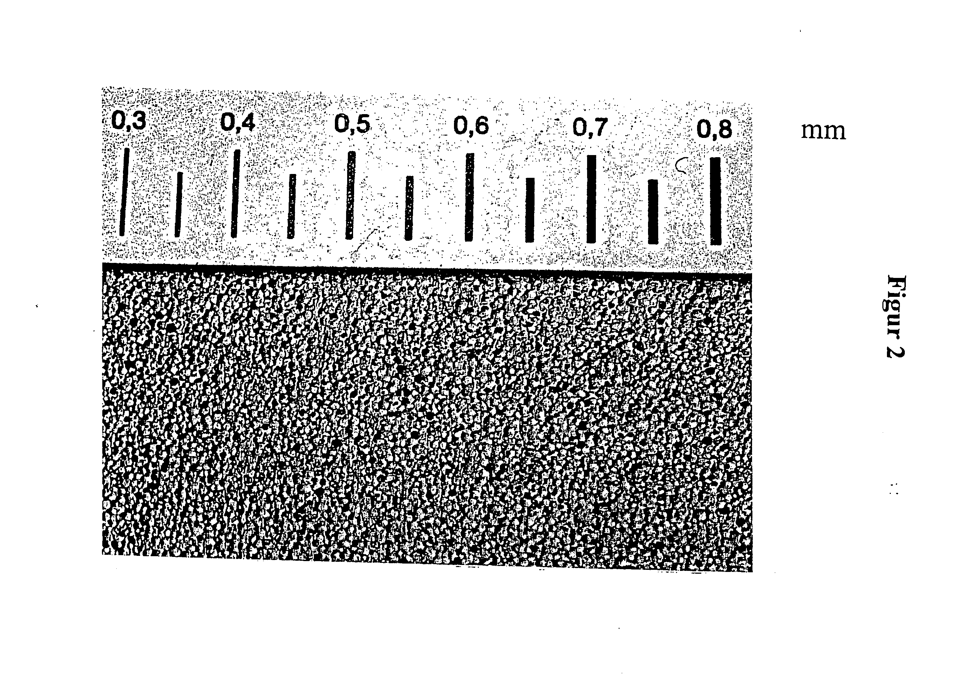

Von dem so erhaltenen Prüfkörper wurde eine lichtmikroskopische Aufnahme angefertigt (siehe Fig. 2).

Des weiteren wurde das Wasseraufnahmevermögen gemessen, indem der Prüfkörper mit der Grundfläche (40 cm x 25 cm) 1 cm tief in Wasser mit einer Temperatur von 20°C eingetaucht wurde. Nach 5 Minuten (0:05), 10 Minuten (0:10), 20 Minuten (0:20), 30 Minuten (0:30) und 60 Minuten (1:00) wurde jeweils die aufgenommene Wassermenge bestimmt.

Die von dem 8 cm dicken Prüfkörper aufgenommene Wassermenge wurde sodann auf einen Formkörper mit einer Fläche von 1 m² (Dicke: 8 cm) umgerechnet und ist in Fig. 1 dargestellt.

Zum Vergleich wurde das Wasseraufnahmevermögen von zwei hydrophoben mineralischen Wärmedämmplatten und einer hydrophilen Wärmedämmplatte gemessen.

Als hydrophobe mineralische Wärmedämmplatte wurden Poratec MSP 130 der Poratec GmbH, Deutschland, und Multipor MSP der Xella Deutschland GmbH, Deutschland, verwendet. Die Wärmedämmplatte Multipor MSP ist gemäß der Lehre der EP 1 688 401 A2 hergestellt.

Als hydrophile Wärmedämmplatte wurde Redstone Pura der Redstone GmbH, Deutschland verwendet.

Die zu Vergleichszwecken verwendeten hydrophoben Wärmedämmplatten bzw. verwendete hydrophile Wärmedämmplatte wurden ebenfalls auf eine Größe von 40 cm x 25 cm x 8 cm zugerecht geschnitten und mit der Grundfläche (40 cm x 25 cm) 1 cm tief in Wasser (20°C) eingetaucht.

Die Ergebnisse sind in Fig.1 dargestellt. Wie Fig. 1 entnommen werden kann, weist der erfindungsgemäße Formkörper (Poratec Regulate) ein Wasseraufnahmevermögen auf, das zwischen dem des hydrophilen und denen der hydrophoben Prüfkörper liegt.

Fig. 2 ist zu entnehmen, dass der erfindungsgemäße Formkörper (Poratec Regulate) eine sehr homogene Porengrößenverteilung aufweist, wobei etwa 95 Vol.-% der Poren einen Porendurchmesser im Bereich von 0,4 mm bis 0,7 mm haben.

## Patentansprüche

1. Mineralischer Formkörper,
**dadurch gekennzeichnet,**
**dass** der mineralische Formkörper mit wenigstens einem Hydrophobierungsmittel teilweise hydrophobierte Poren und/oder Kapillaren aufweist, wobei die teilweise hydrophobierten Poren und/oder Kapillaren homogen im Formkörper verteilt sind und das Wasseraufnahmevermögen eines eine Grundfläche von 40 cm Länge und 25 cm Breite und eine Höhe von 8 cm aufweisenden mineralischen Formkörpers nach 30 minütigem Eintauchen in Wasser in einem Bereich von 1400 bis 4000 g/m² liegt, wobei der Formkörper mit der Grundfläche in Wasser in einer Tiefe von 1 cm eingetaucht ist.

2. Mineralischer Formkörper nach Anspruch 1,
**dadurch gekennzeichnet,**
**dass** die Poren wenigstens teilweise offenzellig oder gemischtzellig sind.

3. Mineralischer Formkörper nach Anspruch 1 oder 2,
**dadurch gekennzeichnet,**
**dass** der Anteil des Hydrophobierungsmittels in dem mineralischen Formkörper in einem Bereich von 0,01 bis 0,15 Gew.-%, bezogen auf das Gesamtgewicht des trockenen mineralischen Formköpers, liegt.

4. Mineralischer Formkörper nach einem der Ansprüche 1 bis 3,
**dadurch gekennzeichnet,**
**dass** das Hydrophobierungsmittels ein monomeres oder polymeres Alkylsilan und/oder Siloxan ist.

5. Mineralischer Formkörper nach Anspruch 4,
**dadurch gekennzeichnet,**
**dass** das wenigstens eine polymere Siloxan verzweigte oder unverzweigte Alkylketten mit 1 bis 6 Kohlenstoffatomen und/oder Arylgruppen mit 5 bis 7 Kohlenstoffatomen aufweist.

6. Mineralischer Formkörper nach Anspruch 4,
**dadurch gekennzeichnet**
**dass** das wenigstens eine polymere Siloxan ein Polydialkylsiloxan ist, das aus der Gruppe, die aus Polydimethylsiloxan, Polydiethylsiloxan, Polymethylethylsiloxan oder Mischungen derselben besteht, ausgewählt wird, und vorzugsweise eine kinematische Viskosität, bestimmt gemäß DIN 53018 bei einer Temperatur von 25°C, aus einem Bereich von 20 mm²/s bis 5000 mm²/s aufweist.

7. Mineralischer Formkörper nach einem der vorherigen Ansprüche,
**dadurch gekennzeichnet,**
**dass** der mineralische Formkörper geschäumtes Calciumsilikat und/oder Calciumhydrosilikat, vorzugsweise in einem Bereich von 40 bis 60 Gew.%, bezogen auf das Gesamtgewicht des trockenen mineralischen Formkörpers, aufweist.

8. Mineralischer Formkörper nach einem der vorherigen Ansprüche"
**dadurch gekennzeichnet,**
**dass** der mineralische Formkörper aus einer Suspension, die wenigstens eine Flüssigphase, wenigstens ein mineralisches Bindemittel und einen Porenbildner umfasst, hergestellt ist.

9. Mineralischer Formkörper nach Anspruch 8,
**dadurch gekennzeichnet,**
**dass** der Porenbildner Schaum, vorzugsweise Proteinschaum, ist.

10. Mineralischer Formkörper nach einem der vorherigen Ansprüche,
**dadurch gekennzeichnet,**
**dass** der Formkörper eine Rohdichte in einem Bereich von 75 bis 200 kg/m³aufweist.

11. Mineralischer Formkörper nach einem der vorherigen Ansprüche,
**dadurch gekennzeichnet,**
**dass** der Formkörper eine Wärmeleitfähigkeit λ₁₀ₜᵣ von 0,030 W/(m.K) bis weniger als 0,045 W/(m.K), aufweist.

12. Mineralischer Formkörper nach einem der vorherigen Ansprüche,
**dadurch gekennzeichnet,**
**dass** der mineralische Formkörper ein Dämmmaterial, vorzugsweise ein Innenraumdämmmaterial, ist.

13. Bauelement,
**dadurch gekennzeichnet,**
**dass** das Bauelement wenigstens einen mineralischen Formkörper nach einem der Ansprüche 1 bis 12 umfasst oder daraus besteht.

14. Verwendung eines mineralischen Formkörpers nach einem der Ansprüche 1 bis 12 als Dämmmaterial, vorzugsweise als Innenraumdämmmaterial.

15. Verfahren zur Herstellung eines mineralischer Formkörper nach einem der Ansprüche 1 bis 12,
**dadurch gekennzeichnet,**
**dass** das Verfahren folgende Schritte umfasst:
a) Mischen wenigstens einer flüssigen Phase, wenigstens eines mineralischen Bindemittels, wenigstens eines Hydrophobierungsmittels und wenigstens eines Porenbildners unter Bereitstellung einer Rohmischung;
b) Formen der Rohmischung;
c) Härten und/oder Trocknen der geformten Rohmischung unter Bereitstellung des Formkörpers.
